(19)

**Europäisches Patentamt**
**European Patent Office**
**Office européen des brevets**

(11) **EP 4 749 705 A1**

(12) **EUROPEAN PATENT APPLICATION**

(43) Date of publication:
**27.05.2026 Bulletin 2026/22**

(21) Application number: **25212676.8**

(22) Date of filing: **31.10.2025**

(51) International Patent Classification (IPC):
**H01M 4/131** $^{(2010.01)}$

(52) Cooperative Patent Classification (CPC):
**H01M 4/131; H01M 2004/021; H01M 2004/028**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.11.2024 KR 20240154273**

(71) Applicant: **SAMSUNG SDI CO., LTD.**
**Yongin-si, Gyeonggi-do 17084 (KR)**

(72) Inventors:
• **PARK, JeongJoo**
**17084 Yongin-si, Gyeonggi-do (KR)**

• **NAM, Hyun**
**17084 Yongin-si, Gyeonggi-do (KR)**
• **YEOU, Jung Ock**
**17084 Yongin-si, Gyeonggi-do (KR)**
• **PARK, Jin Seok**
**17084 Yongin-si, Gyeonggi-do (KR)**
• **LEE, Minho**
**17084 Yongin-si, Gyeonggi-do (KR)**
• **JEONG, Min-young**
**17084 Yongin-si, Gyeonggi-do (KR)**

(74) Representative: **Michalski Hüttermann & Partner**
**Patentanwälte mbB**
**Kaistraße 16A**
**40221 Düsseldorf (DE)**

(54) **ELECTRODE AND RECHARGEABLE LITHIUM BATTERY INCLUDING THE SAME**

(57) The present disclosure relates to an electrode for a rechargeable lithium battery, containing an electrode current collector, and a multi-layered active material layer. The multi-layered active material layer includes a first active material layer, a second active material layer, and a third active material layer, which are stacked on the electrode current collector. The first active material layer includes a first active material, and the third active material layer includes a second active material. The second active material layer includes first regions that include the first active material, and second regions that include the second active material. The first regions and the second regions are alternatively arranged along a first direction, the first regions extend parallel to each other in a second direction that crosses the first direction, and the second regions extend parallel to each other in the second direction.

FIG. 9

EP 4 749 705 A1

**Description**

CROSS-REFERENCE TO RELATED APPLICATIONS

This patent application claims priority of Korean Patent Application No. 10-2024-0154273, filed on November 4, 2024.

BACKGROUND

The present disclosure herein relates to an electrode, and a rechargeable lithium battery including the electrode.

With increasing presence of electronic devices that use batteries, such as, e.g., mobile phones, laptop computers, electric vehicles, and the like, the demand for rechargeable batteries with high energy density and high capacity is increasing. Accordingly, improving the performance of lithium rechargeable batteries may be advantageous.

A rechargeable lithium battery includes a positive electrode and a negative electrode containing active materials capable of intercalation and deintercalation of lithium ions, and an electrolyte solution, and produces electrical energy through oxidation and reduction reactions while lithium ions are intercalated into and deintercalated from the positive electrode and negative electrode.

SUMMARY

Examples of the present disclosure describe an electrode having improved capacity characteristics and lifespan characteristics.

Other examples of the present disclosure describe a rechargeable lithium battery including the electrode.

An electrode for a rechargeable lithium battery according to an example concept of the present disclosure may include an electrode current collector, and a multi-layered active material layer on the electrode current collector, wherein the multi-layered active material layer may include a first active material layer, a second active material layer, and a third active material layer, which are stacked, e.g., sequentially stacked on the electrode current collector, the first active material layer may include a first active material, the third active material layer may include a second active material. The second active material layer may include first regions including the first active material, and second regions including the second active material, the first regions and the second regions may be alternately arranged along a first direction, the first regions may extend parallel to each other in a second direction crossing the first direction, the second regions may extend parallel to each other in the second direction. The third active material layer may have a larger porosity than the second active material layer, and the second active material layer may have a larger porosity than the first active material layer.

An electrode for a rechargeable lithium battery according to another example concept of the present disclosure may include an electrode current collector, a first active material layer on the electrode current collector, and a second active material layer on the first active material layer. The first active material layer may include first regions including a first active material, and second regions including a second active material. The first regions and the second regions may be alternatively arranged along a first direction, the first regions may extend parallel to each other in a second direction crossing the first direction, and the second regions may extend parallel to each other in the second direction. The second active material layer may include the second active material, and the second active material layer may have a lower rolled density than the first active material layer.

A rechargeable lithium battery according to another example concept of the present disclosure may include a positive electrode, a negative electrode, a separator disposed between the positive electrode and the negative electrode, and an electrolyte solution, wherein at least one of the positive electrode and the negative electrode may include the electrode discussed above.

BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, explain principles of the present disclosure. In the drawings:

FIG. 1 is a conceptual diagram illustrating a rechargeable lithium battery according to example embodiments of the present disclosure;

FIG. 2 to FIG. 5 are schematic diagrams illustrating rechargeable lithium batteries according to example embodiments, in which FIG. 2 may be a cylindrical battery, FIG. 3 may be a prismatic battery, and FIG. 4 and FIG. 5 may be pouch-type batteries;

FIG. 6 is a schematic view of an electrode for a rechargeable lithium battery according to example embodiments of the present disclosure;

FIG. 7 is a cross-sectional view for describing an electrode for a rechargeable battery according to example embodiments of the present disclosure;

FIG. 8 is an enlarged view for describing an electrode according to example embodiments of the present disclosure;

FIG. 9 is a schematic view of an electrode according to other example embodiments of the present disclosure;

FIG. 10 is a cross-sectional view for describing an electrode according to other example embodiments of the present disclosure;

FIG. 11 is an enlarged view for describing an electrode according to other example embodiments of the present disclosure; and

FIG. 12A is a diagram for describing a method of manufacturing an electrode according to example embodiments of the present disclosure. FIG. 12B is a diagram for describing a method of manufacturing an electrode according to other example embodiments of the present disclosure.

DETAILED DESCRIPTION

In order to sufficiently understand the configuration and effects of the present disclosure, example embodiments of the present disclosure are described with reference to the accompanying drawings. It should be noted, however, that the present disclosure is not limited to the example embodiments disclosed hereinafter, and may be implemented in various forms. Rather, the example embodiments are provided to disclose the present disclosure completely and let those skilled in the art fully know the scope of the present disclosure.

In the specification, when an element is referred to as being "on" another element, the element may be formed "directly on" the other element, or intervening elements may be disposed therebetween. In the drawings, thicknesses of components may be exaggerated for effectively describing the technical contents. Like reference numerals or symbols refer to like elements throughout the specification.

Example embodiments described herein are described with reference to cross-sectional and/or plan views, which are ideal illustrations of the present disclosure. In the drawings, the thicknesses of the layers and regions are exaggerated for the effective description of the technical contents. Accordingly, the regions illustrated in the drawings have a schematic nature, and the shapes of the regions illustrated in the drawings are intended to illustrate given forms of regions of a device and are not intended to limit the scope of the disclosure. Although terms such as first, second, third, and the like, have been used to describe various components in various example embodiments of the specification, the components may not be limited by the terms. The terms are only used to distinguish one component from another. Example embodiments described and illustrated herein also include complementary embodiments thereof.

In this specification, singular terms may include plural forms unless specifically stated otherwise. Moreover, unless otherwise specified, "A or B" can imply "including A, including B, or including both A and B." The terms "comprises," and/or "comprising" used in this specification do not preclude the presence or addition of one or more other components in addition to those components specifically mentioned

As used herein, the term "combination thereof" may refer to a mixture, a stack, a composite, a copolymer, an alloy, a blend, or a reaction product, of the components.

Unless otherwise specially defined in this description, a particle diameter may be an average particle diameter. In addition, a particle diameter indicates an average particle diameter (D50), which refers to the diameter of particles at a cumulative volume of about 50 vol% in particle size distribution. The average particle diameter (D50) may be measured by a method known to those skilled in the art, for example, by a particle size analyzer, or by using a transmission electron microscope (TEM) image or a scanning electron microscope (SEM) image. Alternatively, the average particle diameter may be measured by a measurement device using dynamic light-scattering, wherein data analysis is conducted to count the number of particles for each particle size range, and an average particle diameter (D50) value may then be obtained through calculation. Also, a laser diffraction method may be utilized to measure the average particle diameter. In the laser diffraction method, target particles are dispersed in a dispersion medium, then introduced into a commercial laser diffraction particle diameter measurement instrument (e.g., MT3000 of Microtrac), and irradiated to ultrasonic waves of about 28 kHz at an output of about 60 W, and the average particle diameter (D50) based on about 50% of particle diameter distribution may be calculated in the measurement instrument.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

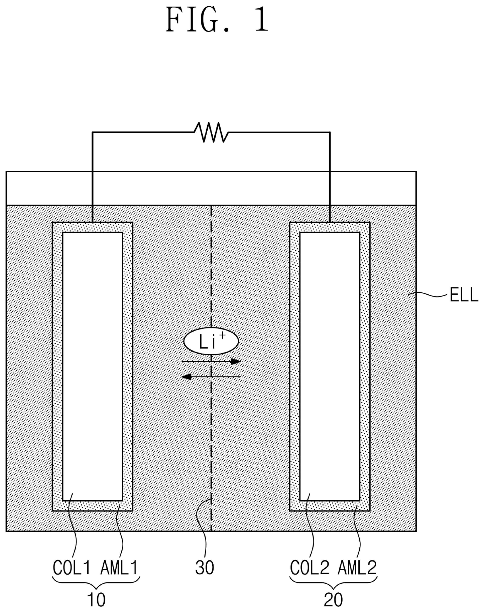

FIG. 1 is a cross-sectional view of a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

Positive Electrode 10

The positive electrode 10 for a rechargeable lithium battery may include a current collector COL1 and a positive electrode active material layer AML1 on the current collector. The positive electrode active material layer AML1 may include a positive electrode active material, and may further include a binder and/or a conductive material (e.g., an electrically conductive material).

For example, the positive electrode 10 may further include an additive that can constitute a sacrificial positive electrode.

An amount of the positive electrode active material may be in a range of about 90 wt% to about 99.5 wt% based on 100 wt% of the positive electrode active material layer AML 1. Amounts of the binder and the conductive material may be in a range of about 0.5 wt% to about 5 wt%, respectively, based on 100 wt% of the positive electrode active material layer AML1.

The binder is configured to attach the positive electrode active material particles to each other, and to attach the positive electrode active material to the current collector COL1. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be configured to impart conductivity(e.g., electrical conductivity) to the electrode. Any material that does not cause an adverse chemical change (e.g., does not cause an undesirable chemical change in the rechargeable lithium battery), and that conducts electrons, can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in the form of a metal powder or a metal fiber; a conductive polymer such as a polyphenylene derivative; or a mixture thereof.

Al may be used as the current collector COL1, but the current collector COL1is not limited thereto.

Positive Electrode Active Material

The positive electrode active material may include a compound (lithiated intercalation compound) that is capable of intercalating and deintercalating lithium. For example, at least one of a composite oxide of lithium, and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ (0.90≤a≤1.8, 0≤b≤0.5, and 0≤c≤0.05); $Li_aMn_{2-b}X_bO_{4-c}D_c$ (0.90≤a≤1.8, 0≤b≤0.5, and 0≤c≤0.05); $Li_aNi_{1-b-c}Co_bX_cO_{2-\alpha}D_\alpha$ (0.90≤a≤1.8, 0≤b≤0.5, 0≤c≤0.5, and 0<α<2); $Li_aNi_{1-b-c}Mn_bX_cO_{2-\alpha}D_\alpha$ (0.90≤a≤1.8, 0≤b≤0.5, 0≤c≤0.5, and 0<α<2); $Li_aNi_bCo_cL^1_dG_eO_2$ (0.90≤a≤1.8, 0≤b≤0.9, 0≤c≤0.5, 0≤d≤0.5, and 0≤e≤0.1); $Li_aNiG_bO_2$ (0.90≤a≤1.8 and 0.001≤b≤0.1); $Li_aCoG_bO_2$ (0.90≤a≤1.8 and 0.001≤b≤0.1); $Li_aMn_{1-b}G_bO_2$ (0.90≤a≤1.8 and 0.001≤b≤0.1); $Li_aMn_2G_bO_4$ (0.90≤a≤1.8 and 0.001≤b≤0.1); $Li_aMn_{1-g}G_gPO_4$ (0.90≤a≤1.8 and 0≤g≤0.5); $Li_{(3-f)}Fe_2(PO_4)_3$ (0≤f≤2); or $Li_aFePO_4$ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of achieving high capacity, and can be applied to a high-capacity, high-density rechargeable lithium battery.

Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may be configured to attach the negative electrode active material particles to each other, and to attach the negative electrode active material to the current collector COL2. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be configured to impart conductivity (e.g., electrical conductivity) to the electrode. Any material that does not cause an adverse chemical change (e.g., that does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector COL2 may include at least one of a copper foil, a nickel foil, a stainless steel foil, a titanium foil, a nickel foam, a copper foam, a polymer substrate coated with a conductive metal, or a combination thereof.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiOx$ ($0 < x < 2$), and a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be present between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof, on one surface or on both surfaces of the porous substrate.

The porous substrate may be or include a polymer film formed of or including any one or more of polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked together.

Electrolyte Solution ELL

The electrolyte solution ELL for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB).

Rechargeable Lithium Battery

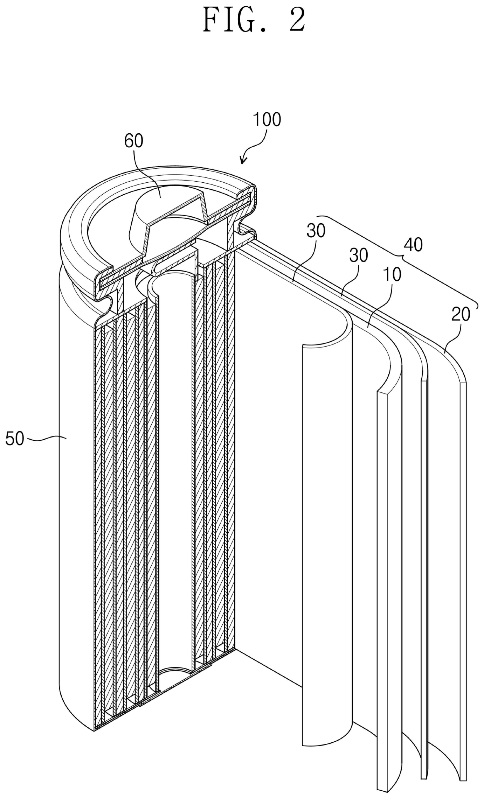

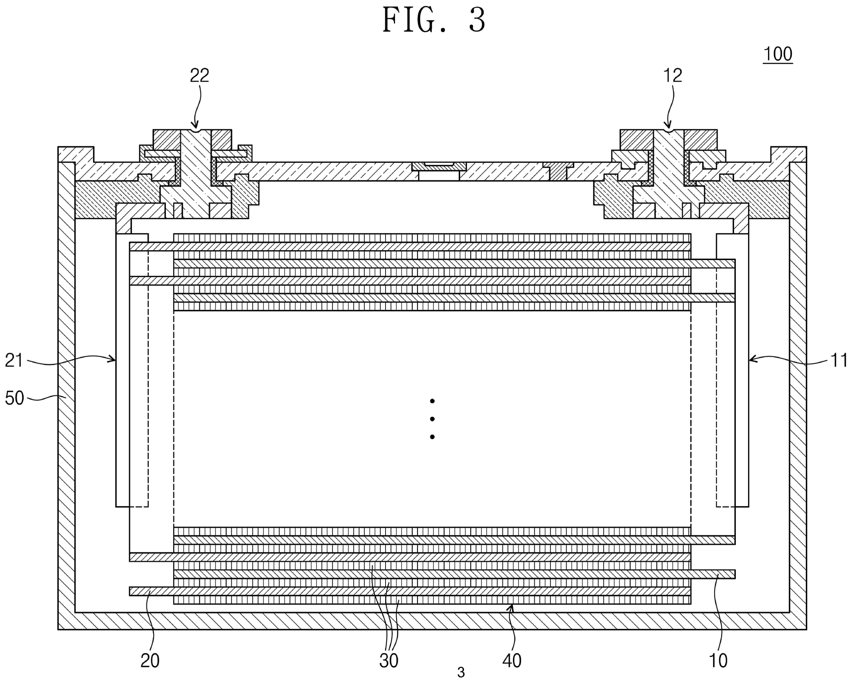

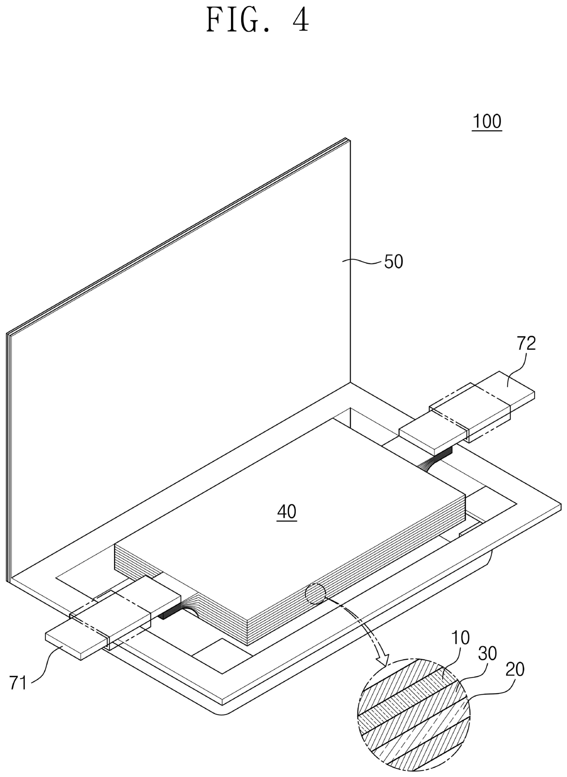

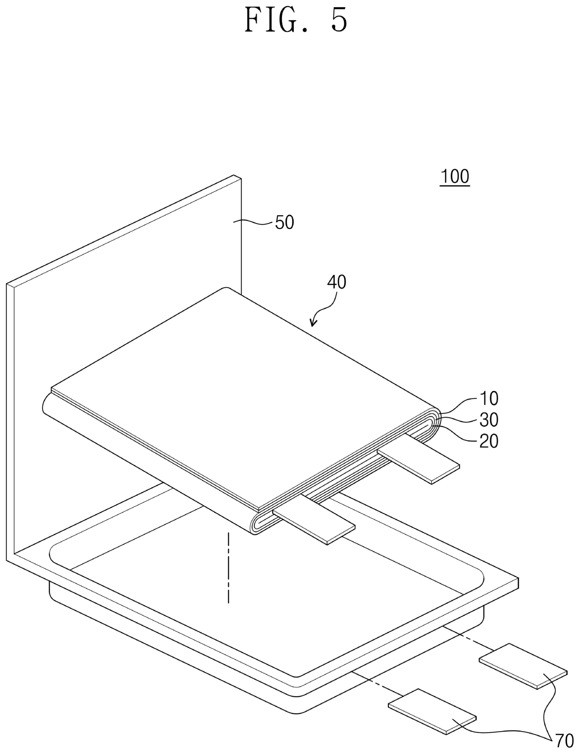

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

According to an example embodiment of the present disclosure, a rechargeable lithium battery including an electrode, a separator, and an electrolyte solution is provided. For example, the rechargeable lithium battery according to example embodiments may include a positive electrode including a positive electrode active material, a negative electrode including a negative electrode active material, and a separator between the negative electrode and the negative electrode, and an electrolyte solution. At least one of the positive electrode and the negative electrode may be an electrode to be described below, and, for example, the positive electrode may be the electrode to be described below. The electrode according to the present disclosure may further be suitable for the positive electrode, but is not limited thereto.

**Electrode for Rechargeable lithium battery**

Hereinafter, the electrode according to example embodiments of the present disclosure is described in more detail. The detailed explanations for technical features duplicated with the rechargeable lithium battery above-described with reference to FIG. 1 to FIG. 5 are omitted, and differences therefrom are described in detail.

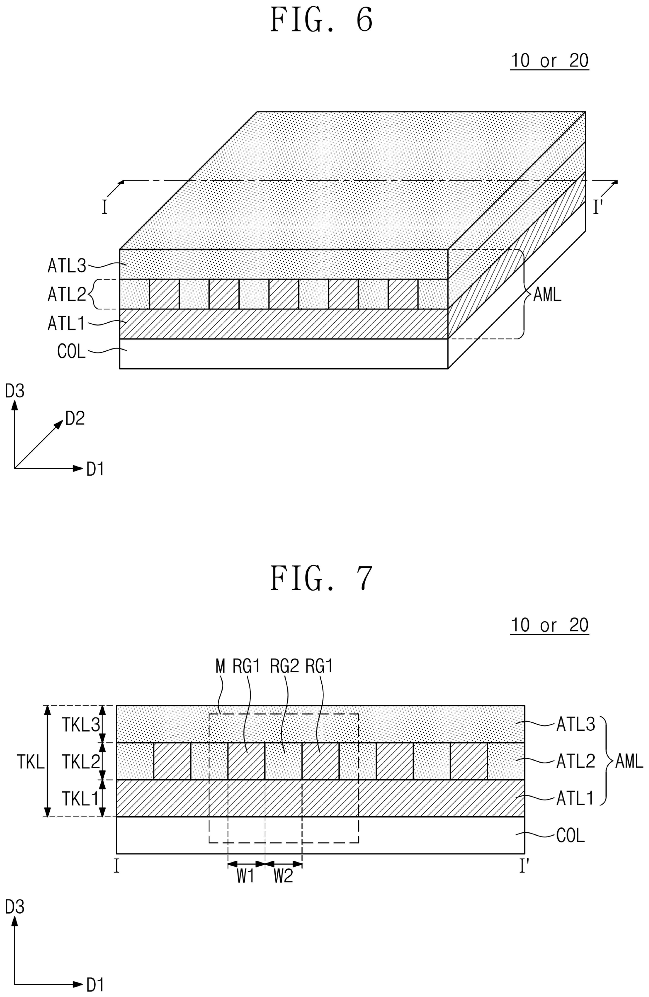

FIG. 6 is a cross-sectional view illustrating a rechargeable lithium battery according to example embodiments of the present disclosure. FIG. 7 is a cross-sectional view for describing the electrode for a rechargeable battery according to example embodiments of the present disclosure, and corresponds to a cross-section taken along line I-I' in FIG. 6.

Each of FIG. 6 and FIG. 7 illustrates a rolled electrode. Hereinafter, unless otherwise specified as a pre-rolled electrode in this specification, an electrode refers to a rolled electrode.

Referring to FIG. 6 and FIG. 7, electrodes 10 and 20 may include an electrode current collector COL and an active material layer AML located on the electrode current collector COL.

The electrodes 10 and 20 may have a top surface that is parallel to a second direction D2 crossing a first direction D1, and is orthogonal to a third direction D3. The first to third directions D1, D2, and D3 may be, for example, orthogonal to each other.

The current collector COL may include the above-described current collector COL1, or current collector COL2.

For example, the electrode current collector COL may be or include at least one of a copper foil, a nickel foil, a stainless-steel foil, a titanium foil, a nickel foam, a copper foam, a polymer substrate coated with a conductive metal, or a combination thereof. In an example embodiment, Al may be used as the electrode current collector COL, but the electrode current collector COL is not limited thereto.

The active material layer AML may include a structure of a multi-layered active material layer. The multi-layered active material layer may include a first active material layer ATL1, a second active material layer ATL2, and a third active material layer ATL3, which are stacked, e.g., sequentially stacked, on the electrode current collector COL. For example, the multilayered-active material layer may include the first active material layer ATL1 disposed on the electrode current collector COL, the second active material layer ATL2 disposed on the first active material layer ATL1, and the third active material layer ATL3 disposed on the second active material layer ATL2.

The first active material layer ATL1 may have a thickness TKL1 in the third direction D3, the second active material layer ATL2 may have a thickness TKL2 in the third direction D3, and the third active material layer ATL3 may have a thickness TKL3 in the third direction D3.

A thickness TKL of the active material layer AML may be a sum of the thickness TKL1 of the first active material layer ATL1, the thickness TKL2 of the second active material layer ATL2, and the thickness TKL3 of the third active material layer ATL3.

The thickness TKL of the active material layer AML may be in a range of about 10 $\mu$m to about 170 $\mu$m. For example, the thickness TKL of the active material layer AML may be about 10 $\mu$m or more, about 11 $\mu$m or more, about 15 $\mu$m or more, about 20 $\mu$m or more, about 30 $\mu$m or more, or about 40 $\mu$m or more. For example, the thickness TKL of the active material layer AML may be about 170 $\mu$m or less, about 160 $\mu$m or less, about 150 $\mu$m or less, about 140 $\mu$m or less, about 130 $\mu$m or less, about 120 $\mu$m or less, about 110 $\mu$m or less, about 100 $\mu$m or less, about 90 $\mu$m or less, about 80 $\mu$m or less, about 70 $\mu$m or less, about 60 $\mu$m or less, or about 50 $\mu$m or less. When the thickness TKL of the active material layer AML falls within the above-described ranges, changes in a volume of a battery during charge and discharge may be reduced or minimized, and a battery having a longer lifespan may be provided.

The thickness TKL1 of the first active material layer ATL1 may be in a range of about 10 $\mu$m to about 100 $\mu$m. The thickness TKL1 of the first active material layer ATL1 may be, for example, about 15 $\mu$m or more, about 20 $\mu$m or more, about 30 $\mu$m or more, or about 40 $\mu$m or more. The thickness TKL1 of the first active material layer ATL1 may be, for example, about 90 $\mu$m or less, about 80 $\mu$m or less, about 70 $\mu$m or less, about 60 $\mu$m or less, about 50 $\mu$m or less or about 40 $\mu$m or less.

The thickness TKL2 of the second active material layer ATL2 may be in a range of about 10 $\mu$m to about 100 $\mu$m. The thickness TKL2 of the second active material layer ATL2 may be, for example, about 15 $\mu$m or more, about 20 $\mu$m or more, about 30 $\mu$m or more, or about 40 $\mu$m or more. The thickness TKL2 of the second active material layer ATL2 may be, for example, about 90 $\mu$m or less, about 80 $\mu$m or less, about 70 $\mu$m or less, about 60 $\mu$m or less, about 50 $\mu$m or less or about 40 $\mu$m or less.

The thickness TKL3 of the third active material layer ATL3 may be in a range of about 10 $\mu$m to about 100 $\mu$m. The thickness TKL3 of the third active material layer ATL3 may be, for example, 15 $\mu$m or more, 20 $\mu$m or more, 30 $\mu$m or more, or 40 $\mu$m or more. The thickness TKL3 of the third active material layer ATL3 may be, for example, 90 $\mu$m or less, 80 $\mu$m or less, 70 $\mu$m or less, 60 $\mu$m or less, 50 $\mu$m or less or 40 $\mu$m or less.

In an example embodiment, as the weight of the active material included in the first active material layer ATL1 increases, TKL1 may increase. In an example embodiment, as the amount of the active material included in the second active material layer ATL2 increases, TKL2 may increase. In an example embodiment, as the amount of the active material included in the third active material layer ATL3 increases, TKL3 may increase.

When the thickness TKL1 of the first active material layer ATL1, the thickness TKL2 of the second active material layer ATL2, and the thickness TKL3 of the third active material layer ATL3 fall within the above-described ranges, changes in a volume during charge and discharge may be reduced or minimized, and a battery having a longer lifespan may be provided. In addition, adhesion of the active material layer AML to the electrode current collector COL is improved, ease of polar plate processing may also be achieved while increasing or maximizing capacity and energy density of the battery.

According to an example embodiment, the thickness TKL2 of the second active material layer ATL2 may be in a range of about 30% to about 100%, about 30% to about 90%, or about 30% to about 70% with respect to the total thickness of the first active material layer ATL1, or the third active material layer ATL3. When the thickness TKL2 of the second active material layer ATL2 is less than the above-described range, electrical conductivity may decrease. In addition, when the thickness TKL2 of the second active material layer ATL2 exceeds the above-described range, the interfacial resistance may increase.

For example, a thickness ratio TKL1:TKL2:TKL3 of the first active material layer ATL1, the second active material layer ATL2, and the third active material layer ATL3 is equal to about 1:1:1, about 1:0.9:1, about 1:0.7:1, about 1:0.5:1, or about 1:0.3:1.

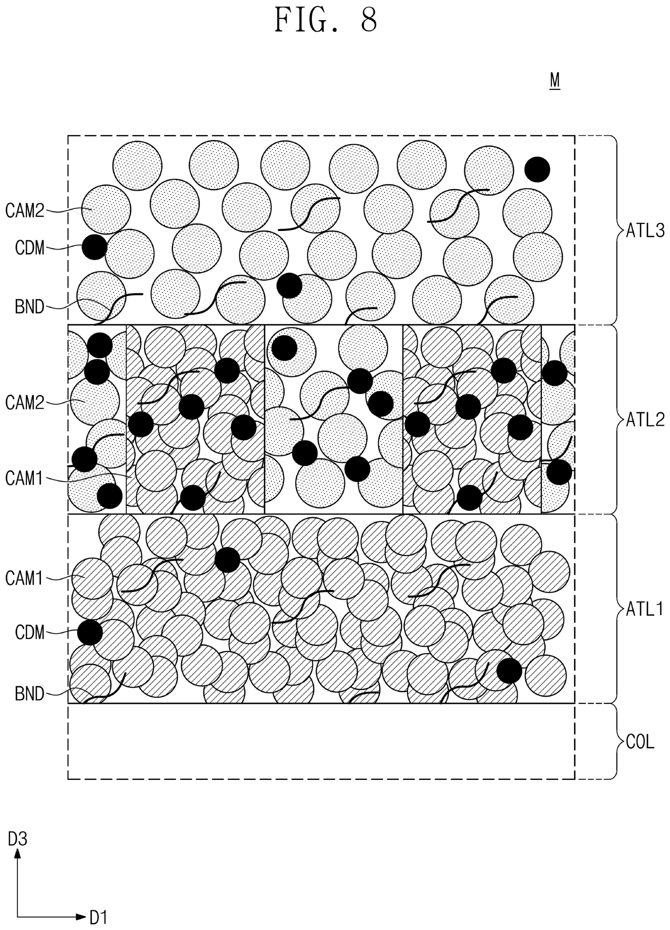

FIG. 8 is an enlarged view for describing an electrode according to example embodiments of the inventive concept. That is, FIG. 8 is an enlarged view in which the area "M" in FIG. 7 is enlarged.

Referring to FIG. 8, the first active material layer ATL1 may be in contact with one surface of an electrode current collector COL. The one surface of the first active material layer ATL1 may be a surface on which the first active material layer ATL1 is in contact with the electrode current collector COL.

The first active material layer ATL1, which is in contact with the electrode current collector COL among the multi-layered active material layer, may include a first active material CAM1.

When the electrode for a rechargeable lithium battery, according to an example embodiment of the present disclosure, is a positive electrode, any material capable of being used as a positive electrode active material of a rechargeable lithium battery may be used as the first active material CAM1.

For example, as the first active material CAM1, a compound (lithiated intercalation compound) that is capable of intercalating and deintercalating lithium may be used. The first active material CAM1 may include a lithium composite oxide represented by Formula 1 below.

Formula 1: $\qquad$ $Li_{x4}M^1_yM^2_zM^3_{1-y-z}O_{2-a}X_a$

In Formula 1 above,

0.5≤x4≤1.8, 0≤a≤0.05, 0≤y≤1, 0≤z≤1, and 0≤y+z≤1,

$M^1$, $M^2$ and $M^3$ may each independently include one or more metals such as or including at least one of Ni, Co, Mn, Al, B, Ba, Ca, Ce, Cr, Fe, Mo, Nb, Si, Sr, Mg, Ti, V, W, Zr or La, and a combination thereof, and

X may include one or more elements such as or including at least one of F, S, P or Cl.

In an example embodiment, in Formula 1 above, $M^1$ may be or include Ni, and 0.8≤y≤1, and 0≤z≤0.2. For example, as the first active material (CAM1), at least one of lithium iron manganese phosphate (LFMP, $LiFePO_4$), nickel manganese oxide (NMX, $NiMnO_2$), lithium nickel cobalt aluminum (NCA, $LiNiCoAlO_2$,), or lithium nickel cobalt manganese (NCM, $LiNiCoMnO_2$) may be used.

When the electrode for a rechargeable lithium battery, according to an example embodiment of the present disclosure, is a negative electrode, any material capable of being used as a negative electrode active material of a rechargeable lithium battery may be used as the first active material CAM1 without limitation.

The first active material CAM1 may have different physical properties from the second active material CAM2. For example, the first active material CAM1 may have larger pellet density and tapped density, and a smaller average particle diameter $D_{50}$ than the second active material CAM2.

Each of the above-described physical properties is one of important properties related to porosity. The pellet density, the tapped density and the average particle diameter ($D_{50}$) may be measured respectively using an instrument such as, e.g., a pellet press, a tapped density tester, and a particle size analyzer by a known method to those skilled in the art.

The first active material CAM1 may be or include an element having a relatively high rolling reduction ratio. For example, the first active material CAM1 may have the pellet density in a range of about 1.7 $g/cm^3$ or more. The pellet density of the first active material CAM1 may be, for example, about 1.7 $g/cm^3$ to about 2.0 $g/cm^3$, about 1.7 $g/cm^3$ to about 1.9 $g/cm^3$, or about 1.7 $g/cm^3$ to about 1.8 $g/cm^3$, and the like. In addition, the first active material CAM1 may have a tapped density in a range of about 1.1 $g/cm^3$ or more. The tapped density of the first active material CAM1 may be, for example, about 1.1 $g/cm^3$ to about 1.4 $g/cm^3$, about 1.1 $g/cm^3$ to about 1.3 $g/cm^3$, and the like. When the pellet density and the tapped density of the first active material CAM1 fall within the above-described ranges, the first active material layer ATL1 may have relatively high rolled density.

The first active material CAM1 may have an average particle diameter ($D_{50}$) in a range of about 2 $\mu$m to about 30 $\mu$m. The average particle diameter of the first active material CAM1 may be, for example, about 3 $\mu$m to about 25 $\mu$m, about 4 $\mu$m to about 23 $\mu$m, about 5 $\mu$m to about 22 $\mu$m, about 6 $\mu$m to about 30 $\mu$m, and the like.

The first active material CAM1 may have a specific surface area in a range of about 2.0 $m^2/g$ or less. The specific surface area of the first active material CAM1 may be, for example, about 0.1 $m^2/g$ to about 2.0 $m^2/g$, about 0.5 $m^2/g$ to about 1.9 $m^2/g$, about 0.7 $m^2/g$ to about 1.8 $m^2/g$, about 1.0 $m^2/g$ to about 1.7 $m^2/g$, and the like.

When each of the average particle diameter ($D_{50}$) and the specific surface area of the first active material CAM1 falls within the above-described ranges, the first active material CAM1 may exhibit high capacity and high energy density.

The first active material layer ATL1 may have a porosity in a range of about 5% to about 12%. The porosity may be an area ratio of voids in the active material layer, as obtained by capturing an image of a cross-section of the rolled polar plate using a scanning electron microscope or the like, and analyzing the captured image using an imaging analyzing software such as, e.g., Image J.

In another example embodiment, the porosity may be obtained by Equation 1 below.

Equation 1:

Porosity (%) = {1-(Apparent density / True density)} X 100

The porosity may be a ratio of pores in the total volume of a sample. From the porosity, presence or absence, and a size of a pore in the sample may be indirectly evaluated.

A volume in the calculation of the apparent density includes the total volume (apparent volume) of the sample, where a void space such as an opened pore within the sample may be considered in the calculation. The apparent density may be a contrasting concept to the true density. The apparent density may be defined as a ratio of the mass of the first active material layer ATL1 to the total volume of the first active material layer ATL1.

The apparent density may be measured using methods such as, e.g., Archimedes' Principle, mercury porosimetry, and liquid pycrnometry. For example, Archimedes' Principle may be a method of calculating a volume by measuring a degree of the buoyancy force exerted on a sample in liquid. For example, the mercury porosimetry may be a method in which a pore structure inside the sample is examined using mercury to calculate the total volume of the sample based on the results. For example, the volume of the sample is directly measured using the liquid pycrnometry, and the apparent density may be calculated. However, the measuring method of apparent density is not limited to the examples described above.

The true density may show a density of pure material itself excluding all pores within the sample. In other words, the true density may be defined as a theoretical density of the first active material layer ATL1 containing no pore. In an example embodiment, the true density may be measured by a gas pycnometer. The true density value may be obtained by allowing gases such as helium to adsorb onto the sample and measuring a change in pressure due to a decrease in a volume of the adsorbed gas.

The measurement method of the true density using the gas pycnometer is as follows. A sample chamber to which the sample is injected is connected to a reference chamber via an expansion valve. A volume (Vc) of the sample chamber and a volume (Vr) of the reference chamber are measured. When a gas inlet valve was opened to introduce helium gas into the sample chamber, The equilibrium pressure inside the sample chamber is P1, and the volume is Vc-Vs. In this case, Vs is a volume of the sample. When the expansion valve is opened, the system has a new equilibrium pressure of P2 and a volume of Vc-Vs+Vr. This may be simply expressed by, P1(Vc-Vs)=P2(Vc-Vs+Vr). Equilibrium pressures of P1 and P2 1 and p2 are measured using a pressure transducer and the volumes of the two chambers, Vc and Vr, are already known, we can derive Vs, and thus Vs can be obtained. The true density can be calculated by dividing the pre-measured mass of the sample by Vs.

According to an example embodiment, the porosity of the first active material layer ATL1 may be, for example, in a range of about 5 % to about 12 %, about 9 % to about 12 %, about 10 % to about 12 %, about 11 % to about 12 %, and the like, When the first active material layer ATL1 exhibits such a porosity, high-rate charge and discharge properties may be improved while achieving high capacity and high energy density.

According to an example embodiment, the amount of the first active material CAM1 may be in a range of about 90 wt% to about 99.5 wt% with respect to the total weight of the first active material layer ATL1.

In an example embodiment, since the active material having a high rolling reduction ratio is disposed in a bottom layer among the multilayered active material layer, energy density of the bottom side increases, and thus charge and discharge properties of the battery may be improved.

The first active material layer ATL1 may further include a binder BND in addition to the first active material CAM1.

The binder BND may be configured to attach the first active material particles to each other, and may be configured to attach the first active material CAM1 to the electrode current collector COL. For example, the binder BND may include at least one of a rubber-based binder, an acrylate-based binder, a polyvinylidene fluoride-based binder, a polyvinyl pyrrolidone-based binder, a nitrile-based binder, an acetate-based binder, a polyvinyl alcohol-based binder, and a cellulose-based binder, but is not limited thereto.

The rubber-based binder may be or include, for example, at least one of styrene butadiene rubber (SBR), nitrile butadiene rubber (NBR), hydrogenated nitrile butadiene rubber (HNBR), or ethylene propylene diene monomer rubber (EPDM).

The acrylate-based binder may be or include, for example, at least one of polyacrylic acid (PAA), polymethylmethacrylate, polyisobutylmethacrylate, polyethylacrylate, polybutyl acrylate, or poly(2-ethylhexyl acrylate).

The polyvinylidene fluoride-based binder may be or include, for example, at least one of polyvinylidene fluoride, polyvinylidene fluoride-co-hexafluoropropylene, polyvinylidene fluoride-co-trichloroethylene, polyvinylidene fluoride-co-tetrafluoroethylene, polyvinylidene fluoride-co-trifluoroethylene, polyvinylidene fluoride-co-trifluorochloroethylene, polyvinylidene fluoride-co-hexafluoropropylene (PVdF), polyvinylidene fluoride-co-trichloroethylene.

The polyvinyl pyrrolidone-based binder may be or include, for example, polyvinylpyrrolidone.

The nitrile-based binder may be or include, for example, polyacrylonitrile, or a acrylonitrilestyrene- butadiene copolymer.

The acetate-based binder may be or include, for example, at least one of polyvinylacetate, polyethylene-co-vinyl acetate, cellulose acetate, cellulose acetate butyrate, or cellulose acetate propionate.

The polyvinyl alcohol-based binder may be or include, for example, polyvinyl alcohol.

The cellulose-based binder may be or include, for example, at least one of carboxy methyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), or cellulose gum.

In an example embodiment, an amount of the binder BND may be in a range of about 0.01 wt% to about 5 wt% with respect to the total weight of the first active material layer ATL1.

The first active material layer ATL1 may further include a conductive material CDM in addition to the first active material CAM1 and the binder BND.

The conductive material CDM may be configured to impart conductivity to the electrodes 10 and 20. Any material that does not cause chemical in the configured battery, and that is electrically conductive material, may be used. As an example, the conductive material CDM may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof may be used.

An amount of the conductive material CDM included in the first active material layer ATL1 may be less than an amount of the conductive material CDM included in the second active material layer ATL2 to be described below. The first active material layer ATL1 may include the conductive material CDM in a trace amount. For example, the amount of the conductive material CDM in the first active material layer ATL1 may be in a range of about 0.5 wt% or less.

According to an example embodiment, the amount of the conductive material CDM may be in a range of about 0.001 wt% to about 0.5 wt% with respect to the total weight of the first active material layer ATL1. When the amount of the conductive material CDM of the first active material layer ATL1 falls within the above-described range, capacity and energy density of the battery may be increased or maximized.

The third active material layer ATL3 may be in contact with one surface of the second active material layer ATL2. The one surface of the second active material layer ATL2 may not be in contact with the first active material layer ATL1. The third active material layer ATL3 may be located on the outermost side of the multi-layered active material layer, and may include the second active material CAM2.

The second active material CAM2 may be the same as or different from the first active material CAM1, described with respect to the first active material layer ATL1. For example, the second active material CAM2 may include a lithium composite oxide represented by Formula 1 above.

The second active material CAM2 may have different physical properties from the above-described first active material CAM1. For example, the second active material CAM 2 may have smaller pellet density and tapped density and a larger average particle diameter ($D_{50}$) than the above-described first active material CAM1.

That is, the second active material CAM2 may be or include a material having a relatively low rolling reduction ratio.

The pellet density and the tapped density of the second active material CAM2 may be smaller than the pellet density and the tapped density of the first active material CAM1. For example, the second active material CAM2 may have a pellet density that is less than about 1.6 g/cm$^3$, and the pellet density of the second active material CAM2 may be, for example, in a range of about 1.3 g/cm$^3$ to about 1.59g/cm$^3$, about 1.4 g/cm$^3$ to about 1.57g/cm$^3$, about 1.5 g/cm$^3$ to about 1.55g/cm$^3$, and the like. In addition, the second active material CAM2 may have a tapped density that is in a range of about 1.1 g/cm$^3$ or less, and the tapped density of the second active material CAM2 may be, for example, about 0.9 g/cm$^3$ to about 1.1 g/cm$^3$, about 1.0 g/cm$^3$ to about 1.1 g/cm$^3$, about 0.9 g/cm$^3$ to about 1.05 g/cm$^3$, and the like. When the pellet density and the tapped density of the second active material CAM2 fall within the above-described ranges, the third active material layer ATL3 may have a relatively low rolled density.

Unless otherwise specified, the measurement of densities such as rolled density, pellet density, and tapped density was carried out at 25 °C and 50% relative humidity.

(1) Rolled Density

The term "rolled density" refers to the density of the electrode active material layer after roll pressing.

An electrode sheet prepared by coating or laminating the electrode composition onto a current collector is roll-pressed under a pressure of 200 kgf/cm$^2$ (or within the pressure range used in the fabrication process).

The thickness of the electrode after roll pressing is measured using a micrometer at five different points across the electrode surface, and the average value is used.

The rolled density (g/cm$^3$) is calculated by dividing the mass per unit area (g/cm$^2$) of the electrode active material layer by the measured thickness (cm) according to the following equation:

Rolled density (g/cm$^3$) = [mass per unit area of electrode active material layer (g/cm$^2$)] / [thickness after roll pressing (cm)]

(2) Pellet Density

The term "pellet density" refers to the density of a pelletized powder measured after uniaxial pressing.

Typically, about 0.5 g of the powder is pressed into a cylindrical pellet (diameter: 13 mm) under a pressure of 200 MPa for 1 minute using a hydraulic press.

The diameter and thickness of the pellet are measured with a micrometer, and the density (g/cm$^3$) is calculated by dividing the pellet mass by its geometric volume.

(3) Tapped Density

The term "tapped density" refers to the density measured according to ASTM B527-15 or an equivalent standard.

About 10 g of the powder is placed in a 25 mL graduated cylinder and subjected to 1 000 taps using a tapping machine (for example, STAV 2003, Hosokawa Micron).

The tapped density ($g/cm^3$) is calculated by dividing the mass of the powder by the final settled volume after tapping.

The second active material CAM2 may have a larger average particle diameter ($D_{50}$) than the first active material CAM1. The second active material CAM2 may have the average particle diameter ($D_{50}$) in a range of about 10 $\mu$m to about 50 $\mu$m. The average particle diameter ($D_{50}$) of the second active material CAM2 may be, for example, in a range of about 10 $\mu$m to about 45 $\mu$m, about 10 $\mu$m to about 30 $\mu$m, or about 5 $\mu$m to about 30 $\mu$m.

The second active material CAM2 may have a larger specific surface area than the first active material CAM1. The second active material CAM2 may have the larger specific surface area of about 1.5 $m^2$/g or more. The specific surface area of the second active material CAM2 may be, for example, in a range of about 1.5 $m^2$/g to about 2.5 $m^2$/g, about 1.6 $m^2$/g to about 2.3 $m^2$/g, about 1.7 $m^2$/g to about 2.1 $m^2$/g, or about 1.8 $m^2$/g to about 2.0 $m^2$/g.

When the specific surface area and the average particle diameter ($D_{50}$) of the second active material CAM2 fall within the above-described ranges, porosity of an electrode surface may be improved.

Since, in the third active material layer ATL3, a material having physical properties in the above-described ranges is used, the third active material layer ATL3 that has a porosity in a range of, for example, about 16% to about 22%, after drying and rolling, may be manufactured, and thus high-rate charge and discharge properties of a battery may be improved, and a battery having high capacity and high energy density may be implemented.

According to an example embodiment of the present disclosure, the porosity of the third active material layer ATL3 may be, for example, in a range of about 16 % to about 22 %, about 16 % to about 21 %, about 16 % to about 20 %, or about 17 % to about 20 %. Therefore, a battery having high capacity and high energy density while decreasing resistance of the polar plate and improving high-rate charge and discharge properties may be implemented.

Herein, also, the porosity may be a measured value after coating, drying, and rolling of the active material layer, or a measured value of a ratio of void spaces within the active material layer by using image analysis software. In addition, the porosity may be calculated by comparing the theoretical density with the true density.

In the third active material layer ATL3, a path of lithium ions may be secured on the surface of the active material layer AML. In an example embodiment, since an active material having a low rolling reduction ratio is disposed on a top layer of the multi-layered active material layer AML, porosity of the top side increases to improve ion conductivity, and thus charge and discharge properties of a battery may be improved.

According to an example embodiment, an amount of the active material CAM2 may be in a range of about 90 wt% to about 99.5% with respect to the total weight of the third active material layer ATL3.

The third active material layer ATL3 may further include a binder in addition to the second active material CAM2. The binder BND may be the same as the binder described in the first active material layer ATL1.

According to an example embodiment, an amount of the binder BND may be in a range of about 0.01 wt% to about 5 wt% with respect to the total weight of the third active material layer ATL3.

The third active material layer ATL3 may further include a conductive material CDM in addition to the second active material CAM2 and the binder BND. The conductive material CDM may be the same as the conductive material CDM described in the first active material layer ATL1.

An amount of the conductive material CDM included in the third active material layer ATL3 may be less than an amount of the conductive material CDM included in the second active material layer ATL2 to be described below. The third active material layer ATL3 may include the conductive material CDM in a trace amount. For example, the amount of the conductive material CDM within the third active material layer ATL3 may be less than about 0.5 wt%.

According to an example embodiment, the amount of conductive material CMD may be in a range of about 0.001 wt% to about 0.5 wt% with respect to the total weight of the third active material layer ATL3. When the amount of the conductive material CDM in the third active material layer ATL3 falls within the above-described range, capacity and energy density of a battery may be increased or maximized.

The second active material layer ATL2 may be in contact with one surface of the first active material layer ATL1. The one surface of the first active material layer ATL1 may not be in contact with the electrode current collector COL.

The second active material layer ATL2 may be or include an active material layer located between the first active material layer ATL1 and the third active material layer ATL3, and may include the first active material CAM1 and the second active material CAM2.

The first active material CAM1 may be the same as the first active material CAM1, described with respect to the first active material layer ATL1, and the second active material CAM2 may be the same as the second active material CAM2, described with respect to the third active material layer ATL3.

The second active material layer ATL2 may include first regions RG1 including the first active material CAM1 and

second regions RG2 including the second active material CAM2.

The first regions RG1 and the second regions RG2 may be alternatively arranged along the first direction D1.

For example, the first regions RG1 may extend in the second direction D2 crossing the first direction D1. From a planar viewpoint, the first regions RG1 may have the form of a line or bar. The first regions RG1 may be arranged along the first direction D1, and may extend parallel to each other in the second direction D2.

The first regions RG1 may be spaced apart from each other in the first direction D1. The first regions RG1 may be in direct contact with one surface of the first active material layer ATL1.

Each of the first regions RG1 may have a first width W1 in the first direction D1. The first width W1 of each of the first regions RG1 may be substantially identical or different.

The second regions RG2 may each be arranged between the first regions RG1, which are adjacent to each other. For example, the second regions RG2 may extent parallel to each other in the second direction D2. From a planar viewpoint, the second regions RG2 may have the form of a line or bar.

The second regions RG2 may be spaced apart from each other in the first direction D1. That is, the second regions RG2 may be provided between the first regions RG1 which are adjacent to each other. The second regions RG2 may be in contact with one surface of the first active material layer ATL1.

Each of the second regions RG2 may have a second width W2 in the first direction D1. The second width W2 of each of the second regions RG2 may be substantially identical or different.

According to an example embodiment, the first regions RG1 and the second regions RG2 may completely cover one surface of the first active material layer ATL1, and the one surface of the first active material layer ATL1 may be unexposed to the outside.

Referring to FIG. 7, the first width W1 is illustrated to be the same as the second width W2, but this is for convenience of explanation, and the present disclosure is not limited thereto. For example, the first width W1 may be the same as the second width W2. In addition, the first width W1 and the second width W2 may be different from each other. For example, the first width W1 may be larger than the second width W2. For example, the first width W1 may be smaller than the second width W2.

According to an example embodiment, the first width W1 and the second width W2 each may be larger than about 1 mm, and smaller than or equal to about 100 nm.

The second active material layer ATL2 may be divided into regions having different porosities to form a pattern. That is, the second active material layer ATL2 may include a first region RG1 and a second region RG2, which have different porosities.

The first region RG1 may include the first active material CAM1, which is described in the first active material layer ATL1, and the second region RG2 may include the second active material CAM2 which is described in the third active material layer ATL3. That is, the second region RG2 may has a relatively higher porosity than the first region RG1.

In the first regions RG1 and the second regions RG2, the total area of each region, and a shape and a size of each region may be identical or different. However, it may be advantageous that the first regions RG1 and the second regions RG2 are distributed as uniformly as possible on the second active material layer ATL2 in a coated form such that any one region is not concentrated in a localized portion of the second active material layer ATL2. Accordingly, resistance to movement of lithium ions between the first active material layer ATL1 having low porosity and the third active material layer ATL3 having high porosity may be reduced.

A volume ratio of the first regions RG1 and the second regions RG2 may be in a range of about 1:9 to about 9:1, or about 3:7 to 5:5 depending on a content ratio of the active material. When the volume ratio is less than a value in the above-described range, there are limitations in which workability may be poor, or a battery having high capacity and high density may not be manufactured. When the volume ratio is greater than the value of the above-described range, a difference of resistance between the first regions RG1 and the second regions RG2 increases, and structural stability and performance of a battery may be lowered.

A volume of the second regions RG1 is calculated by multiplying the first width W1 by the height of the first region RG1, and a volume of the second regions RG2 is calculated by multiplying the second width W2 by the height of the second region RG2. Herein, heights of the first regions RG1 and the second regions RG2 may be substantially identical, and may correspond to the thickness TKL2 of the above-described second active material layer ATL2.

According to an example embodiment, amounts of the first and second active materials CAM1 and CAM2 may be in a range of about 90 wt% to about 98 wt%, with respect to the total weight of the second active material layer ATL2.

According to an example embodiment, the porosity of the second active material layer ATL2 may be smaller than that the porosity of the third active material layer ATL3, and larger than the porosity of the first active material layer ATL1. That is, since the first region RG1 and the second region RG2 are alternatively arranged in the second active material layer ATL2, the second active material layer ATL2 may have a porosity value between the porosities of the first active material layer ATL1 and the third active material layer ATL3. That is, in the electrodes 10 and 20 according to an example embodiment of the present disclosure, the porosity of the active material layer located close to the electrode current collector COL may be relatively smaller than the porosity of the of the active material layer located away from the electrode current collector COL.

The second active material layer ATL2 having a porosity in a range of about 10 % to about 18 % after drying and rolling may be manufactured by alternatively arranging the first region RG1 including the first active material CAM1 and the second region RG2 including the second active material CAM2. According to an example embodiment, the porosity of the second active material layer ATL2 may be, for example, about 10 % to about 18 %, about 11 % to about 17 %, about 12 % to about 16 %, or about 12 % to about 15 %. Therefore, a battery having high capacity and high energy density may be obtained while lowering the resistance of the polar plate and improving high-rate charge and discharge properties.

Herein, also, the porosity may be a measured value after coating, drying, and rolling of the active material layer, or a measured ratio value of an area of void spaces within the active material layer by using image analysis software. In addition, the porosity may be calculated by comparing the theoretical density with the true density.

The second active material layer ATL2 may further include a binder BND in addition to the first and second active materials CAM1 and CAM2. The binder BND may be the same as the binder described in the first active material layer ATL1.

According to an example embodiment, an amount of the binder BND may be in a range of about 0.01 wt% to about 5 wt% with respect to the total weight of the second active material layer ATL2.

The second active material layer ATL2 may further include a conductive material CDM in addition to the first and second active materials CAM1 and CAM2, and the binder BND. The conductive material CDM may be the same as the conductive material CDM described in the first active material layer ATL1.

An amount of the conductive material CDM included in the second active material layer ATL2 may be larger than the amount of the conductive material CDM included in the first active material layer ATL1 and the third active material layer ATL3.

According to an example embodiment, the amount of the conductive material CDM in the second active material layer ATL2 may be in a range of about 3 times to about 10 times greater than the amount of the conductive material CDM in the first active material layer ATL1 or in the third active material layer ATL3. For example, the amount of the conductive material CDM in the third active material layer ATL3 may be in a range of about 1 wt% to about 5 wt%.

Meanwhile, when the amount of the conductive material CDM in the second active material layer ATL2 is substantially high, contents of the active materials decrease, and thus energy density may be lowered. Therefore, the amount of the conductive material CDM included in the first regions RG1 and the second regions RG2 may be suitably adjusted.

The electrodes 10 and 20 according to an example embodiment of the present disclosure may include, in the second active material layer ATL2, the conductive material CDM in a higher amount than in the first active material layer ATL1 and the third active material layer ATL3, and thus interfacial resistance between the first active material layer ATL1 and the third active material layer ATL3 may be lowered.

In addition, the electrodes 10 and 20 according to an example embodiment of the present disclosure may include a structure in which the second active material layer ATL2 including the first region RG1 and the second region RG2 that are alternatively arranged and having different porosities, is disposed between the first active material layer ATL1 having a relatively small porosity and the third active material layer ATL3 having a relatively high porosity. Accordingly, an increase in resistance of ions due to an increase in the amount of the conductive material CDM in the second active material layer ATL2 may be improved, and thus a path of lithium ions in the active material layer AML may be secured.

For example, when the second active material layer ATL2, in which the first region RG1 and the second region RG2 having different porosities are alternatively arranged is omitted, interface between layers of the multilayered active material layer increases, which may cause a decrease in durability during charge and discharge.

The electrodes 10 and 20 according to an example embodiment of the present disclosure have an improved ionic conductivity and allow the interfacial resistance to decrease between the layers of the multi-layered active material layer, and thus may improve an electrochemical performance and characteristics of cycle performance and lifespan of a rechargeable lithium battery.

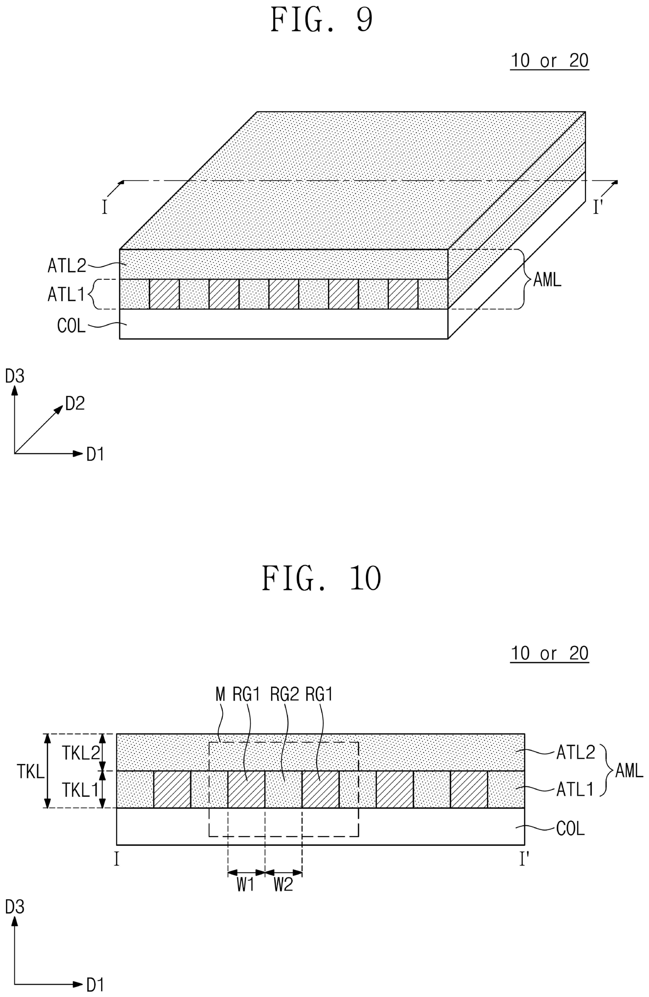

FIG. 9 is a schematic view of an electrode for a rechargeable lithium battery according to other example embodiments of the present disclosure. FIG. 10 is a cross-sectional view for describing an electrode for a rechargeable battery according to other example embodiments of the present disclosure, which corresponds to a cross-section taken along line I-I' in FIG. 9.

Hereinafter, in the example embodiment, the detailed descriptions for the technical features duplicated with the description explained above with reference to FIG. 6 to FIG. 8 are omitted, and differences are explained in detail.

Referring to FIG. 9 and FIG. 10, electrodes 10 and 20 according to another example embodiment of the inventive concept may include a double-layered active material layer AML. That is, in the electrodes 10 and 20 according to another example embodiment of the present disclosure, the first active material layer ATL1 described in FIG. 6 to FIG. 8 may be omitted.

The electrodes 10 and 20 according to another example embodiment may include an electrode current collector COL, and an active material layer AML disposed on the electrode current collector COL.

The electrodes 10 and 20 may have a top surface which is parallel to a first direction D1 and a second direction D2 crossing the first direction D1, and is orthogonal to a third direction D3. The first to third directions D1, D2, and D3 may be, for example, orthogonal to each other.

The electrode current collector COL may include the above-described current collector COL1, or a collector COL2.

The active material layer AML may include a first active material layer ATL1 and a second active material layer ATL2, which are stacked, e.g., sequentially stacked, on the electrode current collector COL. For example, the active material layer AML may include a first active material layer ATL1 disposed on the current collector COL, and a second active material layer ATL2 disposed on the first active material layer ATL1.

The first active material layer ATL1 may have a thickness TKL1 in the third direction D3, and the second active material layer ATL2 may have a thickness TKL2 in the third direction D3. The thickness TKL of the active material layer AML may be a sum of the thickness TKL1 of the first active material layer ATL1 and the thickness TKL2 of the second active material layer ATL2.

The thickness TKL1 of the first active material layer ATL1 may be in a range from about 30% to about 100%, about 30% to about 90%, or about 30% to about 70% with respect to the total thickness of the second active material layer ATL2.

When the thickness TKL1 of the first active material layer ATL1 is less than the above-described range, electrical conductivity has a tendency of decreasing. In addition, when the thickness TKL1 of the first active material layer ATL1 exceeds the above-described range, there is a disadvantage in that interfacial resistance increases.

For example, a thickness ratio TKL1: TKL2 of the first active material layer ATL1 and the second active material layer ATL2 may be about 1:1, about 0.9:1, about 0.7:1, about 0.5:1, or about 0.3:1.

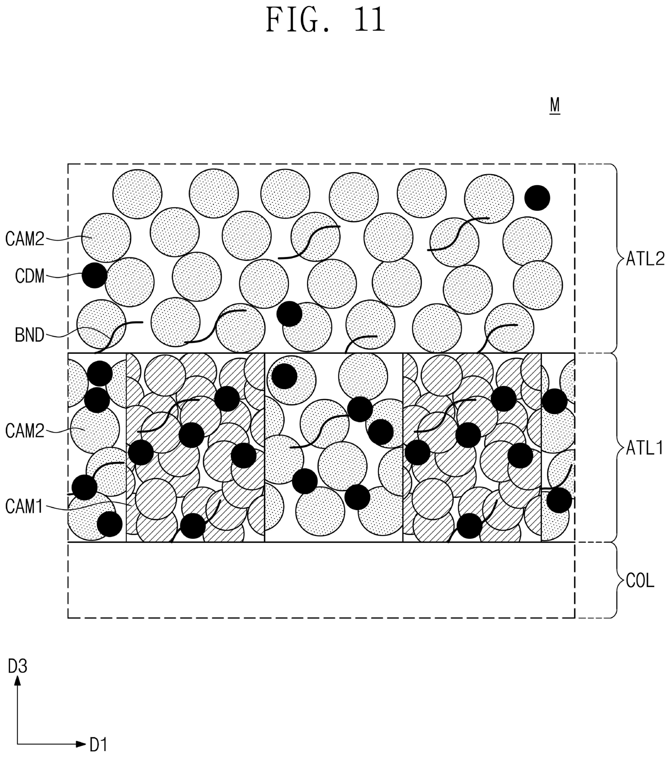

FIG. 11 is an enlarged view describing electrodes according to other example embodiments of the present disclosure. That is, FIG. 11 is an enlarged view magnifying the area "M" illustrated in FIG. 10.

Referring to FIG. 11, the first active material layer ATL1 may be in contact with one surface of the electrode current collector COL. The one surface of the first active material layer ATL1 may be a surface on which the first active material layer ATL1 is in contact with the electrode current collector COL.

The first active material layer ATL1 may be an active material layer, among layers of the multi-layered active material layer, which is in contact with the electrode current collector COL, and may include a first active material CAM1 and a second active material CAM2.

The first active material CAM1 may be the same as the first active material CAM1 described above with respect to FIG. 6 to FIG. 8, and the second active material CAM2 may be the same as the second active material CAM2 described above with respect to FIG. 6 to FIG. 8.

The first active material layer ATL1 may include first regions RG1 including the first active material CAM1, and second regions RG2 including the second active material CAM2.

The first regions RG1 and the second regions RG2 may be alternatively arranged along the first direction D1.

For example, the first regions RG1 may extend parallel to each other in the second direction D2 crossing the first direction D1. From a planar viewpoint, the first regions RG1 may have a shape of a line or bar. The first regions RG1 may be arranged along the first direction D1, and may extend parallel to each other in the second direction D2.

The first regions RG1 may be spaced apart from each other in the first direction D1. The first regions RG1 may be in direct contact with one surface of the electrode current collector COL.

Each of the first regions RG1 may have a first width W1 in the first direction D1. Each of the first width W1 of the first regions RG1 may be identical to, or different from, each other.

The second regions RG2 may each be arranged between the first regions RG1 that are adjacent to each other. For example, the second regions RG2 may extend parallel to each other in the second direction D2. From a planar viewpoint, the second regions RG2 may have a shape of a line or bar.

The second regions RG2 may be spaced apart from each other in the first direction D1. That is, the second region RG2 may be provided in the first direction D1 between the first regions RG1 adjacent to each other. The second regions RG2 may be in direct contact with one surface of the electrode current collector COL.

The second regions RG2 may each have a second width W2 in the first direction D1. The second width W2 of each of the second regions RG2 may be identical to, or different from, each other.

According to an example embodiment, the first regions RG1 and the second regions RG2 may completely cover one surface of the electrode current collector COL, and the one surface of the electrode current collector COL may be unexposed to the outside.

A shape or composition of the first regions RG1 and the second regions RG2 may be the same as the configuration of the second active material layer ATL2 described in FIG. 6 to FIG. 8.

For example, the first width W1 may be the same as the second width W2. In addition, the first width W1 may be different from the second width W2. For example, the first width W1 may be larger than the second width W2. For example, the first width W1 may be smaller than the second width W2.

A volume ratio of the first regions RG1 and the second regions RG2 may be a ratio in a range of about 1:9 to 9:1, about 3:7 to about 5:5 depending on the amount ratio of the active materials.

The volume of the first regions RG1 is determined by multiplying the first width W1 by the height of the first region RG1, and the volume of the second regions RG2 is determined multiplying the second width W2 by the height of the second region RG2. Herein, the heights of the first region RG1 and the second region RG2 are identical, and correspond to the thickness TKL1 of the above-described first active material layer ATL1.

According to an example embodiment, the amount of each of the first and second active materials CAM1 and CAM2 may be in a range of about 90 wt% to about 98 wt% with respect to the total weight of the first active material layer ATL1.

The first active material layer ATL1 may be divided into regions having different porosities from each other to form patterns. For example, the first active material layer ATL1 may include a first region RG1 and a second region RG2, which have different porosities from each other.

The first region RG1 may include the above-described first active material CAM1, and the second region RG2 may include the above-described second active material CAM2. For example, the second region RG2 may have relatively higher porosity than the first region RG1.

According to an example embodiment, the porosity of the first active material layer ATL1 may be smaller than the porosity of the second active material layer ATL2.

By alternatively arranging the first active material CAM1 and the second active material CAM2 in the first active material layer ATL1, the first active material layer ATL1 having a porosity in a range of about 10 % to about 18 % after drying and rolling may be manufactured.

According to an example embodiment, the porosity of the first active material layer ATL1 may be in a range of about 10 % to about 18 %, about 11 % to about 17 %, about 12 % to about 16 %, or about 12 % to about 15 %.

The first active material layer ATL1 may further include a binder BND in addition to the second active materials CAM1 and CAM2. The binder BND may be the same as the binder BND described above.

The first active material layer ATL1 may further include a conductive material CDM in addition to the first and second active materials CAM1 and CAM2, and the binder BND. The conductive material CDM may be the same as the conductive material CDM described above.

An amount of the conductive material CDM included in the first active material layer ATL1 may be larger than an amount of the conductive material CDM included in the second active material layer ATL2 to be described below.

According to another example embodiment, the amount of the conductive material CDM within the first active material layer ATL1 may be in a range of about 3 times to about 10 times greater than the amount of the conductive material CDM within the second active material layer ATL2 to be described below. For example, the amount of the conductive material CDM in the first active material layer ATL1 may be in a range of about 1 wt% to about 5 wt%.

The second active material layer ATL2 may be in contact with one surface of the first active material layer ATL1. One surface of the first active material layer ATL1 may be a surface on which the first active material layer ATL1 is not in contact with the electrode current collector COL. The second active material layer ATL2 is located on an outermost side among layers of the double-layered active material layer, and may include a second active material CAM2.

The second active material CAM2 may be the same as or different from the above-described second active material CAM2. For example, the second active material CAM2 may have different physical properties from the above-described first active material CAM1. For example, the second active material CAM2 may have a smaller pellet density and tapped density, and larger average particle diameter ($D_{50}$) than the first active material CAM1.

The second active material CAM2 may be a substance having a relatively low rolling reduction ratio. The pellet density and the tapped density of the second active material CAM2 may be smaller than the pellet density and the tapped density of the first active material CAM1.

According to an example embodiment, the porosity of the second active material layer ATL2 may be in a range of, for example, about 16 % to about 22 %, about 16 % to about 21 %, about 16 % to about 20 %, or about 17 % to about 19 %. Here, also, the porosity may be measured after coating, drying, and rolling of the active material layer, and a measured ratio value, by using an image analysis software, of an area of void spaces within the active material layer. Accordingly, a battery having high capacity and high energy density may be obtained, the battery having a lowered resistance of the polar plate and an improved high-rate charge and discharge properties.

In the second active material layer ATL2, a path of lithium ions may be secured on a surface of the active material layer AML. In an example embodiment, by disposing an active material having low rolling reduction ratio on a top layer of the active material layer, the porosity of the top layer may increase to improve ionic conductivity, and thus high-rate charge and discharge properties of the batter may be improved.

According to an example embodiment, an amount of the second active material CAM2 may be in a range of about 90 wt% to about 99.5 wt% with respect to the total weight of the second active material layer ATL2.

The second active material layer ATL2 may further include a binder BND in addition to the second active material CAM2. The binder BND may be the same as the binder described above.

According to an example embodiment, an amount of the binder BND may be in a range of about 0.01 wt% to about 5 wt% with respect to the total weight of the second active material layer ATL2.

The second active material layer ATL2 may further include a conductive material CDM in addition to the second active material CAM2 and the binder BND. The conductive material CDM may be the same as the conductive material CDM described above.

An amount of the conductive material CDM included in the second active material layer ATL2 may be smaller than the amount of the conductive material CDM included in the first active material layer ATL1. The second active material layer ATL2 may include the conductive material CDM in a trace amount. For example, the amount of the conductive material CDM in the second active material layer ATL2 may be in a range of about 0.5 wt% or less.

According to an example embodiment, the amount of the conductive material CDM may be in a range of about 0.001 wt% to about 0.5 wt% with respect to the total weight of the second active material layer ATL2. When the amount of the conductive material CDM in the second active material layer ATL2 falls within the above-described ranges, capacity and energy density of the battery may be increased or maximized.

Electrodes 10 and 20 according to another example embodiment includes the conductive material CDM within the first active material layer ATL1 in a higher amount, than the second active material layer ATL2, and thus conductivity thereof may be improved. In addition, since the first region RG1 and the second region RG2, having different porosities, are alternatively arranged, resistance of ions due to an increase in the amount of the conductive material CDM in the first active material layer ATL1 may be improved, and thus a path of lithium ions may be secured.

In addition, in the electrodes 10 and 20 according to another example embodiment of the present disclosure, since the active material having a low rolling reduction ratio is disposed on the top layer among layers of the multi-layered active material layer, and the porosity in the top side increases to thereby improve ionic conductivity, and the porosity in the bottom layer decreases to thereby increase energy density, a battery having high capacity and high energy density may be obtained.

## Method of **Preparing** Electrode

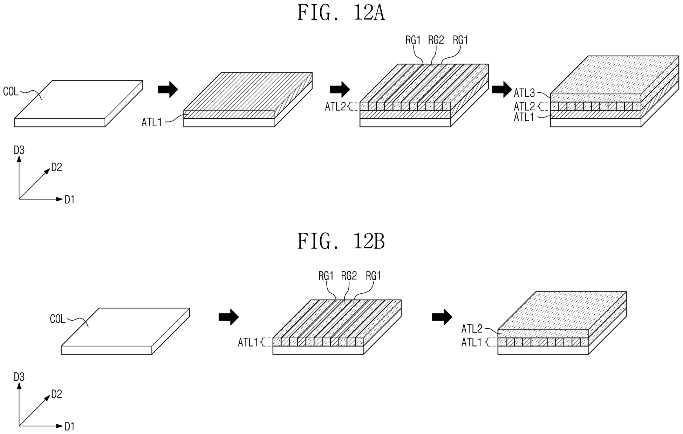

FIG. 12A is a diagram describing a method of manufacturing an electrode according to an example embodiment of the present disclosure.

Referring to FIG. 12A, a method of manufacturing the electrode according to an example embodiment of the present disclosure may include providing an electrode current collector COL, forming a first active material layer ATL1 on the electrode current collector COL, forming a second active material layer ATL2 on the first active material layer ATL1, and forming a third active material layer ATL3 on the second active material layer ATL2.

In an example embodiment, the first active material layer ATL1 may include the first active material layer CAM1, the binder BND, and the conductive material CDM, which are described in FIG. 8. In addition, the second active material layer ATL2 may include the first active material layer CAM1, the second active material layer CAM2, the binder BND, and the conductive material CDM, which are described in FIG. 8. In addition, the third active material layer ATL3 may include the second active material layer CAM2, the binder BND, and the conductive material CDM, which are described in FIG. 8.

The electrode current collector COL, the first active material layer ATL1, the second active material layer ATL2, and the third active material layer ATL3 may each have the same configuration as the electrodes 10 and 20 according to example embodiments described above with respect to FIG. 8, and thus the detailed descriptions thereof are omitted.

The forming of the second active material layer ATL2 may include a formation process of a pattern coating layer. The formation of the patterns coating layer may use a commonly used coating process, and for example, the pattern coating layer may be formed using, e.g., a slot die, lithography, micro contact printing, a screen printing process, a spray coating process and the like, but additional processes may also be used.

The second active material layer ATL2 may include first regions RG1 including the first active material CAM1, and second regions RG2 including the second active material CAM2. The first regions RG1 and the second regions RG2 may be alternatively arranged along the first direction D1. The first regions RG1 may extend parallel to each other in the second direction D2 crossing the first direction D1, and the second regions RG2 may extend in the second direction D2 to be parallel to each other.

According to an example embodiment, at least one of the forming of the first active material layer ATL1, the forming of the second active material layer ATL2, or the third active material layer ATL3 may be performed by a wet process or drying process. In an example embodiment, the first active material layer ATL1, the second active material layer ATL2, and the third active material layer ATL3 may be formed using a wet process, or the first active material layer ATL1, the second active material layer ATL2, and the third active material layer ATL3 may be formed using a dry process. However, an example embodiment of the present disclosure is not limited thereto.

For the wet process, the active materials CAM1 and CAM2, the binder BND, and the conductive material CDM may be mixed in a solvent to prepare an electrode mixture, and the mixture may be applied onto the electrode current collector COL, dried and rolled. As the solvent in the slurry, a generally used solvent in the art may be used. For example, at least one of dimethyl sulfoxide (DMSO), isopropyl alcohol, N-methyl pyrrolidone (NMP), acetone, water, and a combination thereof may be included.

For the dry process, active materials CAM1 and CAM2, the binder BND, and the conductive material CDM, each in a dried state, may be dry mixed without solvent to prepare an electrode mixture, and the mixture may be disposed on the electrode current collector COL, and rolled.

FIG. 12B is a diagram describing a method of manufacturing an electrode according to another example embodiment.

Referring to FIG. 12B, the method of preparing an electrode according to another example embodiment may include providing an electrode current collector COL, forming a first active material layer ATL1 on the electrode current collector COL, and forming a second active material layer ATL2 on the first active material layer ATL1.

In an example embodiment, the first active material layer ATL1 may include the first active material CAM1, the second active material CAM2, the binder BND, and the conductive material CDM, which are described in FIG. 11. In addition, the second active material layer ATL2 may include the second active material CAM2, the binder BND, and the conductive material CDM, which are described in FIG. 11.

The electrode current collector COL, the first active material layer ATL1 and the second active material layer ATL2, may each have the same configuration as the configurations of the electrodes 10 and 20 described above with respect to FIG. 11, and thus, hereinafter, the detailed descriptions thereof are omitted.

The forming of the first active material layer ATL1 may include forming of a pattern coating layer. For the formation of the pattern coating layer, a commonly used coating process may be used, and the pattern coating layer may be formed using, e.g., a slot die, lithography, micro contact printing, a screen printing process, a spray coating process and the like, but additional processes may also be used.

The first active material layer ATL1 may include first regions RG1 including first active material CAM1 and second regions RG2 including the second active material CAM2. The first regions RG1 and the second regions RG2 may be alternatively arranged along the first direction D1. The first regions RG1 may extend parallel to each other in the second direction D2 crossing the first direction D1, and the second regions RG2 may extend parallel to each other in the second direction D2.

According to another example embodiment, at least one of the forming of the first active material layer ATL1, or forming of the second active material layer ATL2 may be performed by a wet process or a dry process.

Hereinafter, the positive electrode 10, and the negative electrode 20 manufactured according to the above-described processes may be sequentially subjected to a roll pressing process, a slitting or slicing process, and a notching process. A rechargeable lithium battery according to the present disclosure may be manufactured by stacking, e.g., sequentially stacking, the positive electrode 10, the separator 30, and the negative electrode 20 and providing the electrolyte solution.

The rechargeable lithium battery according to an example embodiment of the present disclosure may be applicable to, e.g., automobiles, mobile phones, and/or various types of electric devices, as non-limiting examples.

Hereinafter, the present disclosure is explained referring to Examples and Comparative Examples. However, the Examples below are only illustrations for explaining the present disclosure, and the scope of the present disclosure is not limited thereto.

### Example 1

**1) Manufacture of Positive Electrode Slurry**

$LiNi_{0.8}Mn_{0.1}Co_{0.1}O_2$ (NCM) having an average particle diameter ($D_{50}$) of about 15 $\mu$m as a first active material, carbon black as a conductive material, polyvinylidene fluoride (PVdF) as a binder resin were added in a solvent, N-methyl pyrrolidone (NMP), at a weight ratio of about 98:0.5:1.5 to prepare a first active material slurry.

$LiNi_{0.8}Mn_{0.1}Co_{0.1}O_2$ (NCM) having an average particle diameter ($D_{50}$) of about 30 $\mu$m as a second active material, carbon black as a conductive material, polyvinylidene fluoride (PVdF) as a binder resin were added in a solvent, N-methyl pyrrolidone (NMP), at a weight ratio of about 98:0.5:1.5 to prepare a second active material slurry.

The first active material, carbon black as a conductive material, polyvinylidene fluoride (PVdF) as a binder resin were added in a solvent, N-methyl pyrrolidone (NMP), at a weight ratio of about 96:2.5:1.5 to prepare a first region coating slurry.

Next, the second active material, carbon black as a conductive material, polyvinylidene fluoride (PVdF) as a binder resin were added in a solvent, N-methyl pyrrolidone (NMP), at a weight ratio of about 96:2.5:1.5 to prepare a second region coating slurry.

**2) Manufacture of Positive Electrode**

Formation of First Active Material Layer:

The manufactured first region coating slurry was applied onto an aluminum thin film having a thickness of about 15 $\mu$m, which is a positive electrode current collector, and dried to form a first active material layer having a thickness of about 50 $\mu$m.

Formation of Second Active Material Layer:

One surface of the first active material layer was coated using the manufactured first region coating slurry and the second region coating slurry, and dried to form the second active material layer having a thickness of about 50 $\mu$m.

The first region formed using the first region coating slurry and the second region formed using the second region coating slurry, each in a stripe shape having a width of about 10 mm, were alternatively arranged, and a volume ratio of the first region and the second region was about 5:5.

Formation of Third Active Material Layer:

The manufactured second active material slurry was applied onto the second active material layer, and dried to form the third active material having a thickness of about 50 $\mu$m.

Thereafter, roll pressing was performed to manufacture the positive electrode, in which the aluminum current collector, the first active material layer, the second active material layer, and the third active material layer were sequentially stacked.

A result of measuring porosity of each active material layer using ImageJ software, the porosity of the first active material layer was about 12 %, and the porosity of the third active material layer was about 20 %, the porosity of the first region was about 12% in the second active material layer, and the porosity of the second region was about 20% in the second active material layer.

### 3) Manufacture of Rechargeable lithium battery

A negative electrode active material of about 98 wt%, in which graphite and a Si composite were mixed at a weight ratio of about 92:8, styrene-butadiene rubber (SBR) of about 1 wt%, and carboxymethyl cellulose (CMC) of about 1 wt% were mixed, then injected to distilled water, and stirred for about 60 minutes using a mechanical stirrer to manufacture a negative electrode active material slurry. The slurry was applied onto a copper current collector having a thickness of about 10 $\mu$m to a thickness of about 60 $\mu$m using a doctor blade, dried in a hot air dryer at about 100 °C for about 0.5 hours, then dried again under conditions of vacuum and about 120 °C for about 4 hours, and roll pressed to manufacture a negative electrode.

LiPF$_6$ of about 1.15 M was dissolved in a non-aqueous organic solvent in which ethylene carbonate (EC), ethyl methyl carbonate (EMC), and dimethyl carbonate (DMC) were mixed at a volume ratio of about 20:40:40, to manufacture an electrolyte solution.

The positive electrode, the negative electrode, a polyethylene separator having a thickness of about 16 $\mu$m were assembled to manufacture an electrode assembly, and the electrolyte solution was injected to manufacture a rechargeable lithium battery.

### Example 2

Formation of First Active Material Layer:

One surface of the first active material layer was coated using the manufactured first region coating slurry and the second region coating slurry, and dried to form a second active material layer having a thickness of about 50 $\mu$m.

The first region formed using the first region coating slurry and the second region formed using the second region coating slurry, each in a stripe shape having a width of about 10 mm, were alternatively arranged, and a volume ratio of the first region and the second region was about 5:5.

Formation of Second Active Material Layer:

The manufactured second active material slurry was applied onto the first active material layer, and dried to form a second active material having a thickness of about 50 $\mu$m.

Thereafter, roll pressing was performed to manufacture a positive electrode, in which the aluminum current collector, the first active material layer, and the second active material layer were sequentially stacked.

As a result of measuring porosity of each active material layer using ImageJ software, the porosity of the second active material layer was about 20 %, the porosity of the first region in the first active material layer was about 12%, and the porosity of the second region in the first active material layer was about 20%.

**Example 3**

A positive electrode and a rechargeable lithium battery were manufactured in the same manner as in Example 1, except that $LiNi_{0.8}Mn_{0.1}Co_{0.1}O_2$ having an average particle diameter ($D_{50}$) of about 5 $\mu$m was used as the first active material, and $LiNi_{0.8}Mn_{0.1}Co_{0.1}O_2$ having an average particle diameter ($D_{50}$) of about 30 $\mu$m was used as the second active material in the manufacture of the positive electrode.
In this case, as a result of measuring porosity of each active material layer using ImageJ software, the porosity of the first active material layer was about 8 %, the porosity of the third active material layer was about 20%, the porosity of the first region in the second active material layer was about 8%, and the porosity of the second region in the second active material layer was about 20%.

**Example 4**

A positive electrode and a rechargeable lithium battery were manufactured in the same manner as in Example 1, with a difference that compositions within the first region coating slurry were mixed such that a weight ratio of the first active material, the conductive material and the binder was about 95: 3.5:1.5 in the manufacture of the positive electrode, and compositions within the second region coating slurry were mixed such that a weight ratio of the second active material, the conductive material and the binder was about 95: 3.5:1.5 in the manufacture of the positive electrode.
As a result of measuring porosity of each active material layer using ImageJ software, the porosity of the first active material layer was about 12 %, the porosity of the third active material layer was about 20%, the porosity of the first region in the second active material layer was about 12%, and the porosity of the second region in the second active material layer was about 20%.

**Comparative Example 1: Positive Electrode Having the Structure of a Double-layered Active Material Layer without Application of Active Material Layer Including First Region and Second Region**

Formation of First Active Material Layer:

The manufactured first active material slurry was applied onto an aluminum thin film that is an electrode current collector and has a thickness of about 15 $\mu$m, and dried to form a first active material having a thickness of about 50 $\mu$m.

Formation of Second Active Material Layer:

The manufactured second active material slurry was applied onto the first active material layer, and dried to form a second active material having a thickness of about 50 $\mu$m.
Thereafter, roll pressing was performed to manufacture a positive electrode, in which the aluminum current collector, the first active material layer, and the second active material layer were sequentially stacked.

**Comparative Example 2: Positive Electrode Having the Structure of a Three-layered Active Material Layer without Increasing of Conductive Material in Active Material Layer Including First Region and Second Region**

A positive electrode and a rechargeable lithium battery were manufactured in the same manner as in Example 1, with a difference that compositions within the first region coating slurry were mixed such that a weight ratio of the first active material, the conductive material and the binder was about 98: 0.5:1.5 in the manufacture of the positive electrode, and compositions within the second region coating slurry were mixed such that a weight ratio of the second active material, the conductive material and the binder was about 98: 0.5:1.5 in the manufacture of the positive electrode.
The compositions of the positive electrode according to Examples and Comparative Examples are listed in Table 1 below.

Table 1:

| Classification | | Average particle diameter ($D_{50}$) of active material | Active material content (wt%) | Conductive material content (wt ) | Binder content (wt%) | Porosity (%) |
|---|---|---|---|---|---|---|
| Example 1 | First active material layer | 15 | 98 | 0.5 | 1.5 | 12 |
| | Second active material layer (First region) | 15 | 96 | 2.5 | 1.5 | 12 |
| | Second active material layer (Second region) | 30 | 96 | 2.5 | 1.5 | 20 |
| | Third active material layer | 30 | 98 | 0.5 | 1.5 | 20 |
| Example 2 | First active material layer (First region) | 15 | 96 | 2.5 | 1.5 | 12 |
| | First active material layer (Second region) | 30 | 96 | 2.5 | 1.5 | 20 |
| | Second active material layer | 30 | 98 | 0.5 | 1.5 | 20 |
| Example 3 | First active material layer | 5 | 98 | 0.5 | 1.5 | 8 |
| | Second active material layer (First region) | 5 | 97 | 2.5 | 1.5 | 8 |
| | Second active material layer (Second region) | 30 | 97 | 2.5 | 1.5 | 20 |
| Example 4 | First active material layer | 15 | 98 | 0.5 | 1.5 | 12 |
| | Second active material layer (First region) | 15 | 95 | 3.5 | 1.5 | 12 |
| | Second active material layer (Second region) | 30 | 95 | 3.5 | 1.5 | 20 |
| | Third active material layer | 30 | 98 | 0.5 | 1.5 | 20 |
| Comparative Example 1 | First active material layer | 15 | 98 | 0.5 | 1.5 | 12 |
| | Second active material layer | 30 | 98 | 0.5 | 1.5 | 20 |

(continued)

| Classification | | Average particle diameter ($D_{50}$) of active material | Active material content (wt%) | Conductive material content (wt ) | Binder content (wt%) | Porosity (%) |
|---|---|---|---|---|---|---|
| Comparative Example 2 | First active material layer | 15 | 98 | 0.5 | 1.5 | 12 |
| | Second active material layer (First region) | 15 | 98 | 0.5 | 1.5 | 12 |
| | Second active material layer (Second region) | 30 | 98 | 0.5 | 1.5 | 20 |
| | Third active material layer | 30 | 98 | 0.5 | 1.5 | 20 |

**Evaluation Example 1: Measurement of Resistance**

A resistance of a mixture layer for the electrode (positive electrode) manufactured according to each Examples was measured.

The resistance of each mixture layer was measured 5 times at room temperature (about 25 °C) using Laresta-GP (MCP-T600 model, manufactured by Mitsubishi Chemical), and an average value thereof was obtained. The results were listed in Table 2 below. Herein, the mixture layer indicates the active material layer stacked on the current collector.

Table 2:

| Classification | Resistance ($\Omega$) |
|---|---|
| Comparative Example 1 | 0.95 |
| Comparative Example 2 | 0.81 |
| Example 1 | 0.45 |
| Example 2 | 0.58 |
| Example 3 | 0.60 |
| Example 4 | 0.55 |

As shown in Table 2, when using the electrode according to Examples of the present disclosure (Examples 1 to 4), it can be confirmed that the resistance of the whole mixture layer significantly decreases compared to the electrodes according to Comparative Examples.

Therefore, the electrode according to Example of the present disclosure may provide dispersion on current flow by alternatively arranging the first region and the second region in the second active material layer.

**Evaluation Example 1: Measurement of Battery Lifespan**

Rechargeable lithium batteries manufactured according to Examples and Comparative Examples were subjected to 300 cycles of charge and discharge under conditions of 0.5 C charge (CC/CV, 4.25 V, 0.05 C Cut-off) /0.5 C discharge (CC, 2.8 V Cut-off), the discharge capacity was measured, a capacity retention rate was calculated, and the results were listed in Table 3 below. The capacity retention rate was calculated according to Equation 1 below.

Capacity retention rate (%) = (Discharge capacity at 300th cycle / Initial discharge capacity) * 100          Equation 1:

Table 3:

| Classification | Capacity retention rate (%) |
|---|---|
| Comparative Example 1 | 85.6 |
| Comparative Example 2 | 87.0 |
| Example 1 | 96.5 |
| Example 2 | 93.7 |
| Example 3 | 95.7 |
| Example 4 | 94.5 |

Referring to Table 3 above, it can be confirmed that, when the electrodes according to Examples of the present disclosure are used (Examples 1 to 4), the capacity retention rate at room temperature depending on the charge and discharge cycles are improved, as compared to the capacity retention rate at room temperature of the electrodes according to Comparative Examples.

The electrode according to the present disclosure includes the active material layer in which the first region and the second region, each having a different porosity, are alternatively arranged, which may allow lithium ions to move readily in the electrode. Therefore, lifespan properties of the rechargeable lithium battery may be improved.

Hitherto, although the example embodiments of the present disclosure have been described with reference to attached drawings, the present disclosure may be implemented in other specific forms without changing the technical idea or essential features thereof. Therefore, it should be understood that the example embodiments described above are illustrations in all aspects and not limiting.

**Claims**

1.    An electrode (10, 20) for a rechargeable lithium battery (100), the electrode (10,20) comprising:

an electrode current collector (COL); and
a multi-layered active material layer (AML) on the electrode current collector (COL),
wherein the multi-layered active material layer (AML) includes a first active material layer (ATL1), a second active material layer (ATL2), and a third active material layer (ATL3), which are stacked on the electrode current collector (COL),
the first active material layer (ATL1) includes a first active material (CAM1),
the third active material layer (ATL3) includes a second active material (CAM2),
the second active material layer (ATL2) includes:

first regions (RG1) including the first active material (CAM1); and
second regions (RG2) including the second active material (CAM2),

the first regions (RG1) and the second regions (RG2) are alternately arranged along a first direction (D1),
the first regions (RG1) extend parallel to each other in a second direction (D2) crossing the first direction (D1),
the second regions (RG2) extend in the second direction (D2) parallel to each other,
the third active material layer (ATL3) has a larger porosity than the second active material layer (ATL2), and
the second active material layer (ATL2) has a larger porosity than the first active material layer (ATL1), wherein preferably the porosity is determined by

$$Porosity\ (\%) = \{1\text{-}(Apparent\ density\ /\ True\ density)\}\ X\ 100,$$

the apparent density is determined by liquid pycrnometry and the true density is determined by gas pycrnometry.

2.    The electrode (10,20) of claim 1,

wherein at least one of the first active material layer (ATL1), the second active material layer (ATL2), and the third active material layer (ATL3) further comprises a binder (BND), and a conductive material (CDM), and
an amount of the conductive material (CDM) in the second active material layer (ATL2) is 3 times to 10 times greater than an amount of the conductive material (CDM) in the first active material layer (ATL1) or the third active material layer (ATL3).

3. The electrode of claim 2, wherein the amount of the conductive material (CDM) in the first active material layer (ATL1) and the third active material layer (ATL3) is in a range of 0.001 wt% to 0.5 wt%.

4. The electrode of claim 2 or 3, wherein the amount of the conductive material (CDM) in the second active material layer (ATL2) is in a range of 1 wt% to 5 wt%.

5. The electrode (10,20) of any of claims 2 to 4, wherein the conductive material (CDM) comprises at least one of natural graphite, artificial graphite, carbon black, acetylene black, ketjen black, a carbon fiber, a carbon nanofiber, and a carbon nanotube.

6. The electrode (10,20) of any of claims 2 to 5, wherein the binder (BND) comprises at least one of a rubber-based binder, an acrylate-based binder, a polyvinylidene fluoride-based binder, a polyvinyl pyrrolidone-based binder, an acetate-based binder, a polyvinyl alcohol-base binder, and a cellulose-based binder.

7. The electrode (10,20) of any of the previous claims,

wherein an average particle diameter ($D_{50}$) of the first active material (CAM1) is smaller than an average particle diameter ($D_{50}$) of the second active material (CAM2), wherein the average particle diameter ($D_{50}$) is determined by laser diffraction method and wherein preferably
the first active material (CAM1) has the average particle diameter ($D_{50}$) in a range of 2 $\mu$m to 30 $\mu$m, and
the second active material (CAM2) has the average particle diameter ($D_{50}$) in a range of 10 $\mu$m to 50 $\mu$m.

8. The electrode (10,20) of any of the previous claims, wherein the first active material (CAM1) and the second active material (CAM2) are each independently represented by Formula 1 below:

Formula 1: $\quad Li_{x4}M^1_yM^2_zM^3_{1-y-z}O_{2-a}X_a$

wherein, in Formula 1 above,

$0.5 \leq x4 \leq 1.8$, $0 \leq a \leq 0.05$, $0 < y \leq 1$, $0 \leq z \leq 1$, and $0 \leq y+z \leq 1$,
$M^1$, $M^2$ and $M^3$ each independently comprises one or more of Ni, Co, Mn, Al, B, Ba, Ca, Ce, Cr, Fe, Mo, Nb, Si, Sr, Mg, Ti, V, W, Zr or La, and a combination thereof, and
X comprises one or more of from F, S, P, or Cl.

9. The electrode (10,20) of any of the previous claims, wherein a volume ratio of the first regions (RG1) to the second regions (RG2) is in a range of 1:9 to 9:1.

10. The electrode (10,20) of any of the previous claims, wherein the second active material layer (ATL2) has a thickness (TKL2) in a range of 30% to 70% with respect to one of the first active material layer (ATL1) and the third active material layer (ATL3).

11. An electrode (10,20) for a rechargeable lithium battery (100), the electrode (10,20) comprising:

an electrode current collector (COL);
a first active material layer (ATL1) on the electrode current collector (COL); and
a second active material layer (ATL2) on the first active material layer (ATL1),
wherein the first active material layer (ATL1) includes:

first regions (RG1) including a first active material (CAM1); and
second regions (RG2) including a second active material (CAM2),

the first regions (RG1) and the second regions (RG2) are alternatively arranged along a first direction (D1),
the first regions (RG1) extend parallel to each other in a second direction (D2) crossing the first direction (D1),
the second regions (RG2) extend in the second direction (D2) parallel to each other,
the second active material layer (ATL2) includes the second active material (CAM2), and

the second active material layer (ATL2) has a lower rolled density than the first active material layer (ATL1).

12. The electrode (10,20) of claim 11, wherein the second active material layer (ATL2) has a larger porosity than the first active material layer (ATL1), wherein preferably the porosity is determined by

$$\text{Porosity (\%)} = \{1\text{-(Apparent density / True density)}\} \times 100,$$

the apparent density is determined by liquid pycrnometry and the true density is determined by gas pycrnometry.

13. The electrode (10,20) of claim 11 or 12,

wherein at least one of the first active material layer (ATL1) and the second active material layer (ATL2) further comprises a binder (BND) and a conductive material (CDM), and
an amount of the conductive material (CDM) in the first active material layer (ATL1) is in a range of 3 times to 10 times greater than an amount of the conductive material (CDM) in the second active material layer (ATL2), and wherein preferably the amount of the conductive material (CDM) in the first active material layer (ATL1) is in a range of 1 wt% to 5 wt%.

14. The electrode (10,20) of claim 13,

wherein the conductive material (CDM) comprises at least one of natural graphite, artificial graphite, carbon black, acetylene black, ketjen black, a carbon fiber, a carbon nanofiber, and a carbon nanotube, and
the binder (BND) comprises at least one of a rubber-based binder, an acrylate-based binder, a polyvinylidene fluoride-based binder, a polyvinylpyrrolidone-based binder, an acetate-based binder, a polyvinyl alcohol-based binder, and a cellulose-based binder.

15. A rechargeable lithium battery (100) comprising:

a positive electrode (10);
a negative electrode (20);
a separator (30) between the positive electrode (10) and the negative electrode (20); and
an electrolyte solution (ELL),
wherein at least one of the positive electrode (10) and the negative electrode (20) comprises the electrode according to any of the previous claims.

# FIG. 1

# FIG. 2

# FIG. 3

EP 4 749 705 A1

# FIG. 4

# FIG. 5

FIG. 6

10 or 20

ATL3
ATL2
ATL1
COL
AML

D3
D2
D1

FIG. 7

10 or 20

M RG1 RG2 RG1

TKL3
TKL
TKL2
TKL1

ATL3
ATL2
ATL1
COL
AML

I    W1 W2    I'

D3
D1

# FIG. 8

# FIG. 9

10 or 20

ATL2

ATL1

COL

AML

D3

D2

D1

# FIG. 10

10 or 20

M RG1 RG2 RG1

TKL

TKL2

TKL1

ATL2

ATL1

COL

AML

I

I'

W1 W2

D3

D1

# FIG. 11

FIG. 12A

FIG. 12B

Europäisches
Patentamt

European
Patent Office

Office européen
des brevets

# EUROPEAN SEARCH REPORT

Application Number

EP 25 21 2676

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/029906 A1 (LG ENERGY SOLUTION LTD [KR]) 8 February 2024 (2024-02-08) | 11-15 | INV. H01M4/131 |
| A | * paragraphs [0076] - [0078], [0103], [0121], [0192] - [0194] * <br> * claims 1-4 * <br> & EP 4 525 068 A1 (LG ENERGY SOLUTION LTD [KR]) 19 March 2025 (2025-03-19) | 1-10 | |
| | ----- | | |
| X | US 2022/069312 A1 (IRISH NICHOLAS P [US] ET AL) 3 March 2022 (2022-03-03) | 1-6,8, 11-15 | |
| A | * figures 4-6 * <br> * claims 1,7 * <br> * paragraphs [0036] - [0043] * | 7,9,10 | |
| | ----- | | |
| X | EP 3 349 274 A1 (LG CHEMICAL LTD [KR]) 18 July 2018 (2018-07-18) | 11,15 | |
| A | * figure 2b * <br> * paragraphs [0029] - [0033] * <br> * example 1 * | 1-10, 12-14 | |
| | ----- | | |

**TECHNICAL FIELDS SEARCHED (IPC)**

H01M

The present search report has been drawn up for all claims

| Place of search | Date of completion of the search | Examiner |
|---|---|---|
| Munich | 6 March 2026 | Galbiati, Ivano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 2676

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2026

| Patent document cited in search report | Publication date | Patent family member(s) | Publication date |
|---|---|---|---|
| WO 2024029906 A1 | 08-02-2024 | EP 4525068 A1 | 19-03-2025 |
| | | JP 2025504864 A | 19-02-2025 |
| | | KR 20240018389 A | 13-02-2024 |
| | | KR 20240171049 A | 06-12-2024 |
| | | US 2025118730 A1 | 10-04-2025 |
| | | WO 2024029906 A1 | 08-02-2024 |
| US 2022069312 A1 | 03-03-2022 | CN 114122307 A | 01-03-2022 |
| | | DE 102021109214 A1 | 03-03-2022 |
| | | US 2022069312 A1 | 03-03-2022 |
| EP 3349274 A1 | 18-07-2018 | CN 108352502 A | 31-07-2018 |
| | | EP 3349274 A1 | 18-07-2018 |
| | | JP 7058838 B2 | 25-04-2022 |
| | | JP 2018537839 A | 20-12-2018 |
| | | KR 20170107921 A | 26-09-2017 |
| | | PL 3349274 T3 | 31-03-2020 |
| | | US 2018337396 A1 | 22-11-2018 |
| | | WO 2017160085 A1 | 21-09-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020240154273